# EUROPEAN PATENT APPLICATION

(11) **EP 4 422 064 A1**
(43) Date of publication of application: **28.08.2024**
(21) Application number: 21969098.9
(22) Date of filing: 24.12.2021
(51) Int. Cl.: H02P 27/08

(54) **ELECTRONIC CONTROL DEVICE AND METHOD FOR CALIBRATING SAME**

(71) Applicant: Hitachi Astemo, Ltd., Ibaraki 312-8503 (JP)
(72) Inventor: TANAKA, Yuta, Hitachinaka-shi, Ibaraki 312-8503 (JP)
(74) Representative: Manitz Finsterwald Patent- und Rechtsanwaltspartnerschaft mbB
(86) International application number: PCT/JP2021/048410
(87) International publication number: WO 2023/119668

(57) **Abstract**

Provided is an electronic control unit that controls a drive current for driving an electric device according to an input signal, the electronic control unit including a computer that calculates a target value based on the input signal and calculates a control command value for the electric device according to the target value, and an electronic component including at least one of an energizing circuit that outputs the drive current according to the control command value and a current detection circuit that detects the drive current and inputs to the computer, in which the computer is configured to correct a response characteristic of the drive current with respect to the target value and match the response characteristic with a reference characteristic acquired in advance.

## Description

### Technical Field

The present invention relates to a vehicular electronic control unit (hereinafter, referred to as ECU) that controls an electric device, and a calibration method for a response characteristic of the electronic control unit.

### Background Art

There is a known ECU that calculates a control command value by a microcomputer and outputs a drive current according to the control command value by an electronic component to drive and control a solenoid valve (PTL 1, etc.).

### Citation List

### Patent Literature

PTL 1: JP 2014-202309 A

### Summary of Invention

### Technical Problem

For example, in a case where an electronic component such as an electronic component is changed with a highperformance electronic component, the response characteristic of the control unit is generally improved. However, there is a case where it is desired to make the response characteristic of the ECU after changing the electronic component equal to those before changing the electronic component.

For example, in an ECU that controls the automatic transmission, when the response characteristic varies due to the change of the electronic component, the response characteristic of the hydraulic control device of the automatic transmission varies accordingly. When the response characteristic of the hydraulic control device varies, the timing of shifting varies, and the cooperativity with the engine system may decrease. In this case, there is a possibility that an impact due to shifting increases and driving performance deteriorates. In order to suppress this deterioration in operation performance, it is needed to calibrate an engine system and a related control system. However, when suppression of the cost of the vehicle system is regarded as important, it is needed to suppress the calibration cost of the vehicle system as a whole. In such a case, it may be desirable to suppress variation in the response characteristic of the control unit caused by a change in the electronic component in order to avoid calibration work that is required related to variation in the characteristic of the control unit.

In the case of the control unit of PTL 1, it is needed to adjust a gain of a PID control and each correction process in order to maintain the response characteristic of the ECU. Such adjustment is necessary for each temperature band and voltage band, and thus man-hours are required. In a case where the response characteristic of the control unit cannot be maintained, it is necessary to change other components such as the engine and the control thereof, and the man-hour is more increased.

An object of the present invention is to provide an electronic control unit capable of suppressing variation in a response characteristic before and after changing an electronic component, and a calibration method for the electronic control unit.

### Solution to Problem

In order to achieve the above object, the present invention provides an electronic control unit that controls a drive current for driving an electric device according to an input signal, the electronic control unit including a computer that calculates a target value based on the input signal and calculates a control command value for the electric device according to the target value, and an electronic component including at least one of an energizing circuit that outputs the drive current according to the control command value and a current detection circuit that detects the drive current and inputs to the computer, in which the computer is configured to correct a response characteristic of the drive current with respect to the target value and match the response characteristic with a reference characteristic acquired in advance.

### Advantageous Effects of Invention

According to the present invention, variation in a response characteristic before and after changing an electronic component can be suppressed.

### Brief Description of Drawings

[FIG. 1] FIG. 1 is a schematic diagram illustrating an electronic control unit according to an embodiment of the present invention.
[FIG. 2] FIG. 2 is a functional block diagram illustrating a configuration example of an electronic control unit according to an embodiment of the present invention.
[FIG. 3] FIG. 3 is a functional block diagram illustrating another configuration example of an electronic control unit according to an embodiment of the present invention.
[FIG. 4] FIG. 4 is a functional block diagram illustrating still another configuration example of an electronic control unit according to an embodiment of the present invention.
[FIG. 5] FIG. 5 is an explanatory diagram illustrating calibration of a response characteristic by correcting a target value in an electronic control unit according to an embodiment of the present invention.
[FIG. 6] FIG. 6 is an explanatory diagram illustrating calibration of a response characteristic by correcting a detection value of a drive current in an electronic control unit according to an embodiment of the present invention.
[FIG. 7] FIG. 7 is a flowchart illustrating a calibration procedure for a response characteristic related to replacement of an electronic component in an electronic control unit according to an embodiment of the present invention.

### Description of Embodiments

Hereinafter, embodiments of the present invention will be described with reference to the drawings.

### - Electronic control unit -

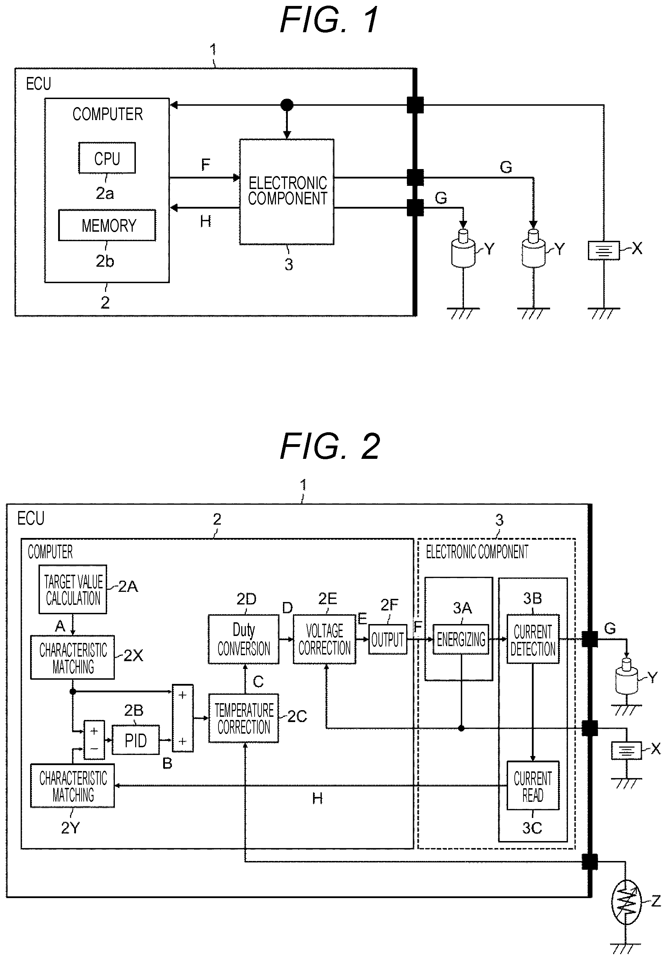

FIG. 1 is a schematic diagram illustrating an electronic control unit (hereinafter, referred to as ECU) according to an embodiment of the present invention, and FIG. 2 is a functional block diagram illustrating the ECU according to an embodiment of the present invention.

The ECU 1 illustrated in the drawings is an in-vehicle control unit mounted on an automobile or the like, and includes a computer 2 and an electronic component 3. The ECU 1 controls and outputs a drive current (control signal) G for driving an electric device Y according to an input signal. The input signal based on which the ECU 1 controls the electric device Y is a detection signal from at least one sensor (not illustrated) that detects various values such as an operation amount of an operation device such as an accelerator pedal or a brake pedal of the automobile, a temperature of various monitoring target devices, and a vehicle speed. The electric device Y controlled by the ECU 1 is an operating equipment driven by a drive current G, such as a solenoid of a fuel injection valve. The number of electric devices Y controlled by one ECU 1 is generally plural, but may be singular.

In addition to the electric device Y, a power source X and a sensor Z are connected to the ECU 1 via a connector. The power source X is, for example, a battery, an ignition switch, or the like. The sensor Z is, for example, a temperature sensor that measures the oil temperature of a transmission.

### - Basic functions of computer -

The computer 2 is a microcomputer and includes a processing device 2a such as a CPU, a memory 2b such as a RAM and a ROM, and the like, and the CPU 2a executes a program stored in the memory 2b to execute various functions. One of basic functions of the computer 2 is a function of calculating a target value A of a drive current to be output to the electric device Y based on an input signal, calculating a control command value F for the electric device Y according to the target value A, and outputting the control command value F to the electronic component 3. This basic functions include a series of functions such as a target value calculation 2A, a PID control 2B, a temperature correction 2C, a duty conversion 2D, a voltage correction 2E, and a PWM output 2F.

The target value calculation 2A is a function of calculating the target value A of the drive current G for the electric device Y based on the input signal related to a state of the automobile such as an accelerator operation amount, a brake operation amount, and a vehicle speed.

The PID control 2B is a function of correcting the target value A calculated by the function of the target value calculation 2A based on the detection value H (described later) of the drive current G output to the electric device Y. For example, the target value A is sequentially corrected such that a difference from the detection value H of the drive current G input from the electronic component 3 becomes a set value (for example, 0). The target value corrected by the function of the PID control 2B is appropriately described as a target value B. The method of the PID control 2B can be appropriately changed in design, and a suitable algorithm can be appropriately selected and applied.

The temperature correction 2C is a function of correcting the temperature characteristic of the electric device Y, and further corrects the target value B according to the measured temperature (for example, the oil temperature of the transmission) input from the sensor Z. The target value corrected by the function of the temperature correction 2C is appropriately described as a target value C. The method of the temperature correction 2C can be appropriately changed in design, and a suitable algorithm can be appropriately selected and applied.

The duty conversion 2D is a function of converting the target value C of the drive current G into a PWM command value D.

The voltage correction 2E is a function of correcting the PWM command value D (correcting the pulse width) according to the voltage of the power source X. The PWM command value corrected by the function of the voltage correction 2E is appropriately described as a PWM command value E. The method of the voltage correction 2E can be appropriately changed in design, and a suitable algorithm can be appropriately selected and applied.

The PWM output 2F is a function of outputting a control command value F (for example, an ON command and an OFF command of a pulse signal) to the electronic component 3 based on the PWM command value E.

### - Electronic component -

The electronic component 3 illustrated in FIG. 2 includes an energizing circuit 3A, a current detection circuit 3B, and a current read circuit 3C. The energizing circuit 3A is, for example, a switching element, and outputs the drive current G (generates and outputs a pulse signal) according to the control command value F from the computer 2 to drive the electric device Y. The current detection circuit 3B detects the drive current G output from the energizing circuit 3A, and outputs the drive current G to the computer 2 as the detection value H. The current read circuit 3C converts the detection value H of the drive current G detected by the current detection circuit 3B into data that can be calculated by the computer 2, and transmits the data to the computer 2 by means such as SPI communication.

Here, FIG. 2 illustrates a case where the energizing circuit 3A is configured by one electronic component (for example, an IC chip), the current detection circuit 3B and the current read circuit 3C are configured by one electronic component (for example, an IC chip), and the plurality of electronic components constitute the electronic component 3. However, the electronic component 3 may be modified.

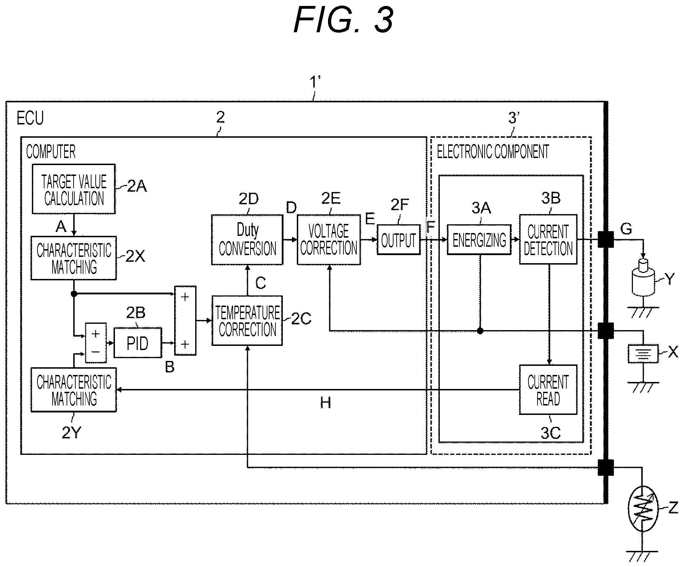

For example, as illustrated in FIG. 3, the energizing circuit 3A, the current detection circuit 3B, and the current read circuit 3C may be configured by one electronic component (for example, an IC chip), and an electronic component 3' configured by the single electronic component may be employed. In FIG. 3, the same or corresponding elements as those illustrated in FIG. 2 are denoted by the same reference numerals as those in FIG. 2, and the description thereof is appropriately omitted.

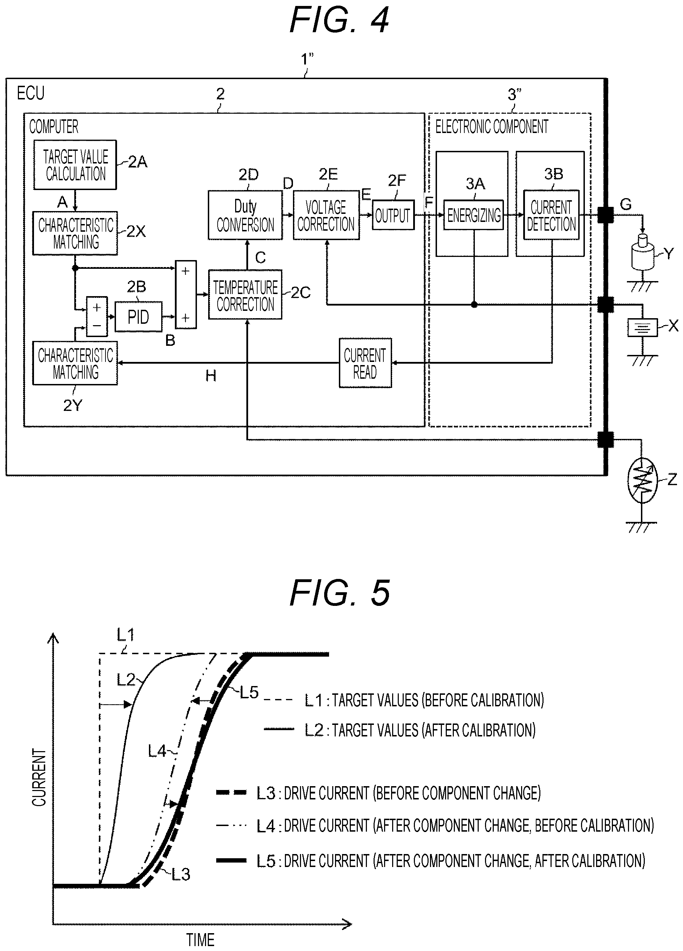

In addition, some functions of the electronic component 3 may be mounted on the computer 2. FIG. 4 illustrates, as an example, a configuration in which the current read circuit 3C is replaced as a function of the computer 2. An electronic component 3" of FIG. 4 is configured by the energizing circuit 3A and the current detection circuit 3B and does not include the current read circuit 3C. In FIG. 4, the same or corresponding elements as those illustrated in FIG. 2 are appropriately denoted by the same reference numerals as those in FIG. 2, and description thereof is omitted.

Although not illustrated, the function of the energizing circuit 3A may be mounted on the computer 2, and the electronic component may be configured by only the current detection circuit 3B and/or the current read circuit 3C.

Nevertheless, according to the present embodiment, the electronic components 3, 3', 3" include at least one of the energizing circuit 3A that outputs the drive current G according to the control command value F and the current detection circuit 3B that detects the drive current G and inputs to the computer 2.

### - Special functions of computer -

The computer 2 is configured (programmed) to correct a response characteristic (output characteristic) of the drive current G with respect to the target value A and match the corrected response characteristic with a reference characteristic acquired in advance. The reference characteristic is a response characteristic of the drive current G with respect to the target value A acquired by the same or equivalent ECU using an electronic component different from the electronic component currently mounted. For example, when the electronic component 3 of the ECU 1 of FIG. 2 is changed (replaced) to the electronic component 3' of FIG. 3 and the ECU 1 of FIG. 2 is changed to the ECU 1' of FIG. 3, the response characteristic of the drive current G in the ECU 1 of FIG. 2 can be the reference characteristic. In this case, the response characteristic of the drive current G in the ECU 1' of FIG. 3 is a quasi-calibration-subject characteristic. In a case where the electronic component 3' of the ECU 1' in FIG. 3 is changed (replaced) to the electronic component 3" of FIG. 4 and the ECU 1' of FIG. 3 is changed to the ECU 1" of FIG. 4, the response characteristic of the ECU 1' of FIG. 3 can be the reference characteristic, and the response characteristic of the ECU 1" of FIG. 4 is the quasi-calibration-subject characteristic.

Specifically, the computer 2 implements the functions of the characteristic matching 2X and 2Y illustrated in FIGS. 2 to 4, and executes these functions. The computer 2 is configured to intentionally suppress, by the functions of the characteristic matching 2X and 2Y, the response characteristic of the ECU, which increases more than necessary if the functions of the characteristic matching 2X and 2Y do not work and intentionally match the response characteristic with the reference characteristic.

The characteristic matching 2X is a function of adjusting the drive current G output from the energizing circuit 3A by correcting the target value A, and matching the response characteristic after changing the electronic component with the reference characteristic before changing the electronic component. For example, in a case where the electronic component 3 in FIG. 2 is replaced with the electronic component 3' of FIG. 3 and the ECU 1 is updated to the ECU 1' in terms of hardware, there is a possibility that the response output of the drive current G with respect to the target value A is faster when the ECU 1' is used than when the ECU 1 is used depending on the performance of the energizing circuit 3A or the like. Therefore, the target value A is corrected in the characteristic matching 2X using the data of the response characteristic acquired using the ECU 1 as the reference characteristic, and the response characteristic of the ECU 1' is matched with the reference characteristic. The correction of the target value A is executed by filtering the target value A in the process of the characteristic matching 2X using a filter function incorporating one or a plurality of functions such as moving average processing, delay processing, and addition of dead time.

FIG. 5 is an explanatory diagram illustrating calibration of the response characteristic of the ECU by the function (correction of the target value) of the characteristic matching 2X of the computer 2. In the drawing, the line L1 (thin broken line) represents target values A calculated by the function of the target value calculation 2A in response to a certain input signal. It is assumed that, in the ECU 1 of FIG. 2, the drive current G is output as indicated by the line L3 (thick broken line) in response to the line L1. Thereafter, the electronic component 3 is replaced with the electronic component 3' to update the ECU 1 to the ECU 1', and the drive current G is output as indicated by the line L4 (two-dot chain line) in the ECU 1' with respect to the same target value A (line L1) due to the variation in the response characteristic.

In such a case, the filtering process is performed on the target value A calculated by the function of the target value calculation 2A by using the function of the characteristic matching 2X, for example, adjusting the parameter of the filter function. Specifically, the target value A of the line L1 is adjusted to be corrected to the line L2 (thin solid line) so that the response characteristic of the ECU 1' originally represented by the line L4 becomes the response characteristic of the line L5 (thick solid line) matching (approximating) the response characteristic (line L3) before replacing the component. FIG. 5 illustrates an example that, in a case where the response of the drive current G becomes faster in the ECU 1' compared with the ECU 1 for the same input signals, the target value A is calibrated to rise more slowly in the ECU 1' than in the ECU 1.

The characteristic matching 2Y is a function of correcting the detection value H of the drive current G input from the current detection circuit 3B and matching the response characteristic after changing the electronic component with the reference characteristic before changing the electronic component. For example, in a case where the ECU 1 is updated to the ECU 1' in terms of hardware by replacing the electronic component 3 in FIG. 2 with the electronic component 3' of FIG. 3, there is a possibility that feedback of the drive current G becomes faster in the ECU 1' than in the ECU 1 due to processing efficiency of the current detection circuit 3B and the current read circuit 3C. Therefore, the detection value H is corrected in the characteristic matching 2Y using the data of the response characteristic acquired using the ECU 1 as the reference characteristic, and the response characteristic of the ECU 1' is matched with the reference characteristic. The correction of the detection value H is executed by filtering the detection value H in the process of the characteristic matching 2Y using a filter function incorporating one or a plurality of functions such as moving average processing, delay processing, and addition of dead time.

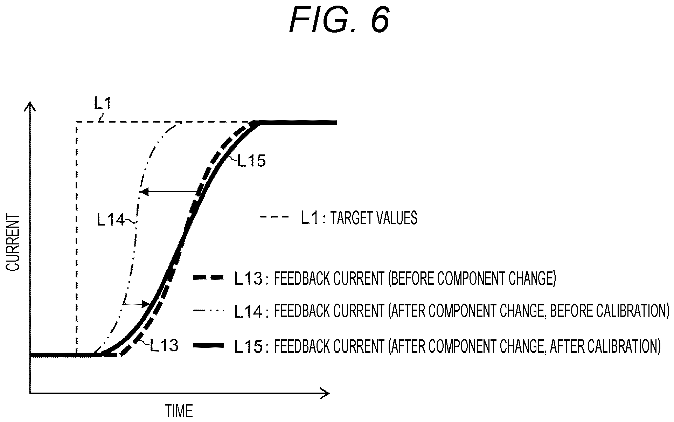

FIG. 6 is an explanatory diagram illustrating calibration of the response characteristic of the ECU by the function (correction of the detection value H) of the characteristic matching 2Y of the computer 2. In the drawing, the line L1 (thin broken line) represents the target value A calculated by the function of the target value calculation 2A in response to a certain input signal, similarly to FIG. 5. In the example of FIG. 6, it is assumed that, in the ECUs 1 and 1', the behaviors of the drive currents G output in response to the target values A that transitions along the line L1 are similar. For the drive currents G exhibiting the same behavior in this manner, it is assumed that the detection value H of the drive current G is input to the computer 2 with the characteristic indicated by the line L13 (thick broken line) in the ECU 1 and with the characteristic indicated by the line L14 (two-dot chain line) in the ECU 1' (before calibration).

In such a case, the detection value H input from the electronic component is corrected by using the function of the characteristic matching 2Y, for example, adjusting the parameter of the filter function. In other words, the detection value H that actually behaves as indicated by the line L14 in the ECU 1' is corrected by the process of the characteristic matching 2Y, and the apparent detection value H in the ECU 1' is corrected so as to match (approximate) the value before replacing the component (line L15) as indicated by the line L13 (thick solid line). FIG. 6 illustrates an example in which the ECU 1' is calibrated so that the characteristic of the detection value is delayed from that of the ECU 1 when the response of the detection value H becomes faster in the ECU 1' compared with the ECU 1 with respect to the same drive current G.

### - Operation -

Here, an operation of the ECU 1' configured by replacing the electronic component 3 of the ECU 1 with the electronic component 3' will be described as an example.

After activation, the ECU 1' calculates a target value A of the drive current G for driving the electric device Y according to an input signal such as an accelerator operation amount by program processing executed by the computer 2, and transmits a control command value F according to the target value A to the electronic component 3. The electronic component 3 converts the received control command value F into a PWM voltage, and outputs a drive current G to drive the electric device Y. The drive current G sent to the electric device Y is measured by the electronic component 3 and sequentially input to the computer 2. The computer 2 sequentially corrects the control command value F transmitted to the electronic component 3 so that the difference between the drive current G and the detection value H becomes a set value (for example, 0).

In this manner, in the process of outputting the drive current G based on the target value A according to the input signal, the computer 2 corrects the response characteristic of the drive current G with respect to the target value A by the function of at least one of the characteristic matching 2X and 2Y to match the corrected response characteristic with the reference characteristic acquired in advance. As a result, even when the ECU 1' in which the electronic component 3 is changed to the electronic component 3' is used, the electric device Y operates similarly to the case of using the electronic component 3.

### - Calibration method for ECU -

In a case where an electronic component is replaced with an electronic component having a different characteristic in the ECU according to the present embodiment, a step of performing calibration is performed such that the response characteristic of the ECU after replacing the electronic component matches the response characteristic (reference characteristic) before replacing the electronic component. When a first electronic component (the electronic component before replacement) of the ECU is replaced with a second electronic component (the electronic component having a response characteristic different from that of the first electronic component), the response characteristic of the ECU after replacing the first electronic component with the second electronic component is calibrated by the following procedure. This calibration process can be performed using, for example, a measurement calculation unit such as a computer different from the ECUs 1 and 1'. Here, the first electronic component before the replacement will be described as the electronic component 3, and the second electronic component after the replacement will be described as the electronic component 3'.

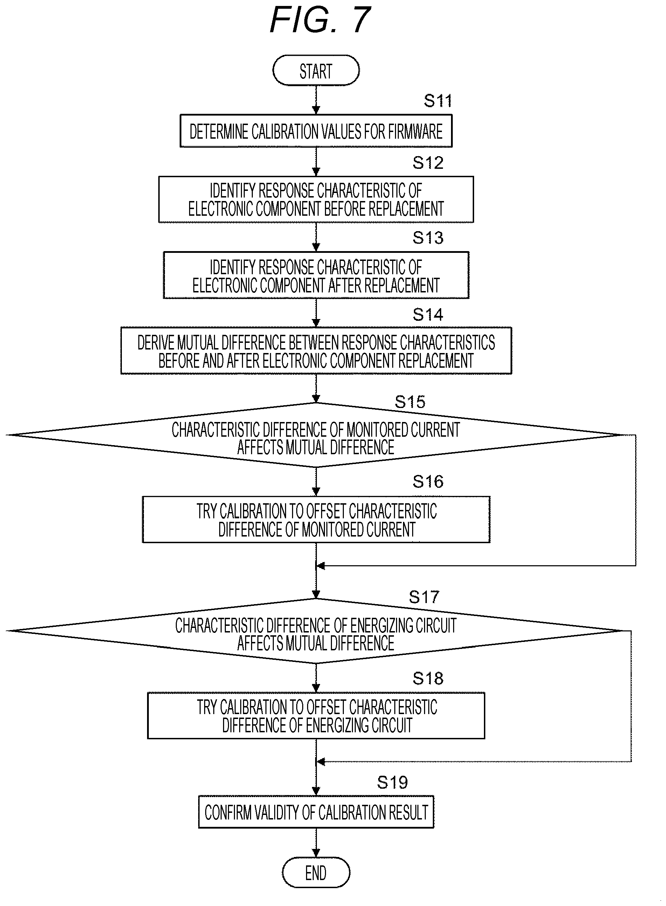

FIG. 7 is a flowchart illustrating a calibration procedure for the response characteristic of the ECU related to the replacement of the electronic component.

### • Step S11

In order to calibrate the response characteristic of the ECU 1' after replacing the electronic component, it is needed to collect relationship data between the target value A and the drive current G before and after replacing the electronic component under the condition that the characteristic matching 2X and 2Y, the temperature correction 2C, the duty conversion 2D, and the voltage correction 2E are set to be the same. In step S11, when the relationship data is collected, calibration values for firmware such as the characteristic matching 2X and 2Y, the temperature correction 2C, the duty conversion 2D, and the voltage correction 2E are determined. For example, before replacing the electronic component, the operation of the electric device Y and the vehicle using the ECU 1 is confirmed, and if necessary, the calibration values of the firmware such as the setting of the temperature correction 2C, the duty conversion 2D, and the voltage correction 2E of the ECU 1 is adjusted so that the operation of the electric device Y and the vehicle becomes appropriate.

Then, for example, in a case where the electronic component 3 (ECU 1) is used as changing the accelerator operation amount and the brake operation amount, a predetermined amount or more (for example, a certain time or more) of a first data set, which is relationship data between the target value A and the drive current G, is collected. Thereafter, in a case where the electronic component 3 is changed (replaced) to the electronic component 3' to update the hardware and the electronic component 3' (ECU 1') is used, a second data set, which is the relationship data between the target value A and the drive current G, is collected in the same manner as the collection of the first data set. The first data set and the second data set can be stored in the memory 2b of the computer 2 or can be stored in a computer or a storage medium different from the ECUs 1 and 1'.

It is needless to say that the settings of the temperature correction 2C, the duty conversion 2D, and the voltage correction 2E in the ECU 1' are not changed, and are kept the same as the settings of the temperature correction 2C, the duty conversion 2D, and the voltage correction 2E in the ECU 1 (at the time of collecting the first data set). At the time of collection of the second data set, parameter adjustment and the like of the characteristic matching 2X and 2Y are not performed, and the setting of the characteristic matching 2X and 2Y in the ECU 1' is kept the same as the setting of the characteristic matching 2X and 2Y in the ECU 1. Therefore, at the time of collection of the first data set and the second data set, the control command values F output from the computers 2 to the electronic component 3, 3' in the ECUs 1, 1' behave in a similar manner in response to the same input signal. In addition, the detection values H input from the electronic components 3 and 3' to the computers 2 in the ECUs 1 and 1' are similarly used as the basis of the calculation of the PID control 2B regardless of the difference in values.

After the first data set and the second data set are collected as described above, the procedure proceeds to the calibration work by adjusting the setting values of the processes of the characteristic matching 2X and 2Y in and after step S12.

### • Step S12

In step S12, a response characteristic (for example, L3 and L13 in FIGS. 5 and 6) of the drive current G to the target value A in the case of using the electronic component 3 (ECU 1) is identified as a reference characteristic based on the first data set. Since the first data set is performed before the replacement of the electronic component, the identification process of the reference characteristics in step S12 may be performed before the replacement of the electronic component (for example, at the time of collecting the first data set) in the process of step S11.

### • Step S13

In subsequent step S13, the response characteristic (for example, L4 and L14 in FIGS. 5 and 6) of the drive current G to the target value A in the case of using the electronic component 3' (ECU 1') is identified as a calibration-subject characteristic based on the second data set. The identification process of the calibration-subject characteristic in step S13 may be performed in the same order as or in parallel with the identification process of the reference characteristic (step S12).

### • Step S14

After the reference characteristic and the calibration-subject characteristic (the response characteristic of the ECU before and after replacing the electronic component) are identified, next, in step S14, a mutual difference between the reference characteristic and the calibration-subject characteristic is derived based on the reference characteristic and the calibration-subject characteristic.

### • Step S15

After the mutual difference between the reference characteristic and the calibration-subject characteristic is derived, it is determined in step S15 whether the mutual difference includes a characteristic difference of the monitored currents in the ECUs 1 and 1' (that is, a behavior difference of the detection values H due to the detection or reading of the drive currents G). Whether the characteristic difference of the monitored current affects the mutual difference can be determined, for example, by comparing the results of measuring the drive current G having the same value by the electronic components 3 and 3'. In addition, it is also possible to perform machine learning on response characteristic collected by another ECU that is the same as or equivalent to the ECUs 1 and 1' and data of performed calibration, and determine whether the characteristic difference of the monitored current affects the mutual difference based on the reference characteristic and the calibration-subject characteristic by the computer under the learning data.

### • Step S16

In a case where it is determined that the characteristic difference of the monitored current affects the mutual difference, in step S16, the function used for the processing of the characteristic matching 2Y (for example, parameter setting or the like) is adjusted, and calibration for offsetting the characteristic difference of the monitored current (matching or approximating the calibration-subject characteristic with the reference characteristic) is tried. As the function used for the processing of the characteristic matching 2Y, a method of performing trial adjustment while operating the ECU 1' can be adopted, or a method of performing adjustment according to a calibration value calculated based on the quasi-characteristic and the calibration-subject characteristic under the learning data can be adopted. In this manner, the computer 2 is programmed such that the detection value H of the drive current G input from the electronic component 3' is corrected in the process of the characteristic matching 2Y, and the calibration-subject characteristic matches the reference characteristic.

### • Step S17

In step S17, it is determined whether the ECU 1, 1' includes the characteristic difference of the energizing circuit 3A (that is, the response characteristic to the control command value F in the energizing circuit 3A) as a factor of the mutual difference between the reference characteristic and the calibration-subject characteristic. Whether the characteristic difference of the energizing circuit 3A affects the mutual difference can be determined, for example, by comparing results of measuring the drive current G output from the electronic components 3 and 3' in response to the same control command value F by using a same measuring instrument. In addition, it is also possible to perform machine learning on response characteristic collected by another ECU that is the same as or equivalent to the ECUs 1 and 1' and data of calibration performed, and determine whether the characteristic difference of the energizing circuit 3A affects the mutual difference based on the reference characteristic and the calibration-subject characteristic by the computer under the learning data.

### • Step S18

In a case where it is determined that the characteristic difference of the energizing circuit 3A affects the mutual difference, in step S18, the function used for the processing of the characteristic matching 2X (for example, parameter setting or the like) is adjusted, and calibration of offsetting the characteristic difference of the energizing circuit 3A (matching or approximating the calibration-subject characteristic to the reference characteristic) is tried. As the function used for the processing of the characteristic matching 2X, a method of performing trial adjustment while operating the ECU 1' can be adopted, or a method of performing adjustment according to a calibration value calculated based on the quasi-characteristic and the calibration-subject characteristic under the learning data can be adopted. The computer 2 is programmed such that the target value A is corrected, the drive current G output from the energizing circuit 3A is adjusted by the processing of the characteristic matching 2X, and the calibration-subject characteristic matches the reference characteristic in this manner.

### • Step S19

Finally, in step S19, it is confirmed that the response characteristic of the ECU 1' after calibration matches or approximates the response characteristic of the ECU 1, that is, validity of the calibration result, and the calibration process is ended. Whether or not the response characteristics of the ECUs 1 and 1' are approximate to each other can be determined based on whether or not the mutual difference between the response characteristics of the ECUs 1 and 1' falls within a predetermined allowable value.

Note that FIG. 7 illustrates a typical example of the procedure of the calibration process, and for example, there is a possibility that the mutual difference between the response characteristics of the ECUs 1 and 1' does not fall within the allowable value even if the procedures of steps S16 and S18 are tried. In such a case, the procedure of step S16, step S18, or both steps S16 and 18 is repeated until the mutual difference between the response characteristics of the ECUs 1 and 1' falls within the allowable value.

### - Effects -

(1) According to the present invention, by the function of the characteristic matching 2X and/or the characteristic matching 2Y as described above, the variation in the response characteristic of the ECU due to the replacement of the electronic component can be suppressed. As described above, since the variation in the response characteristic before and after the change of the electronic component can be suppressed, it is not needed to calibrate the related control system according to the variation in the response characteristic of the ECU, and it is possible to reduce the number of man-hours required for the calibration work as the entire vehicle system and contribute to the suppression of the cost of the vehicle system.
(2) Further, in the software of the computer 2, it is not needed to change basic parts such as the temperature correction 2C, the duty conversion 2D, and the voltage correction 2E, and the response characteristics of the ECU can be calibrated by adjusting the setting of only the characteristic matching 2X and 2Y. This point can also contribute to reduction of man-hours of the calibration work.
(3) In addition, the electronic component may include a plurality of circuits, and when the electronic component is updated, a characteristic difference of any of the circuits may affect the response characteristic of the ECU. In the configuration illustrated in FIG. 2 and the like, for example, a characteristic difference between the energizing circuit 3A that generates and outputs the drive current G and a monitored current (current detection circuit 3B, current read circuit 3C, or both) that measures the drive current G and inputs the drive current G to the computer 2 may individually affect the ECU and the response characteristic.

On the other hand, the ECU of the present embodiment has functions of characteristic matching 2X for correcting the target value A and characteristic matching 2Y for correcting the detection value H. With this configuration, it is possible to flexibly adjust both the deviation of the response characteristic caused by the characteristic difference of the energizing circuit 3A and the deviation of the response characteristic caused by the characteristic difference of the monitored current, and the waveform of the response characteristic of the ECU after replacing the electronic component can be accurately approximated to the reference characteristic.

### Reference Signs List

1, 1', 1" electronic control unit
2 computer
2X, 2Y characteristic matching
3, 3', 3" electronic component
3A energizing circuit
3B current detection circuit
A target value
F control command value
G drive current
H detection value of drive current
L3, L13 line (reference characteristic)
L4, L14 line (response characteristic, calibration-subject characteristic)
Y electric device

## Claims

1. An electronic control unit that controls a drive current for driving an electric device according to an input signal, the electronic control unit comprising:
a computer that calculates a target value based on the input signal and calculates a control command value for the electric device according to the target value; and
an electronic component including at least one of an energizing circuit that outputs the drive current according to the control command value and a current detection circuit that detects the drive current and inputs to the computer,
wherein the computer is configured to correct a response characteristic of the drive current with respect to the target value and match the response characteristic with a reference characteristic acquired in advance.

2. The electronic control unit according to claim 1, wherein the computer is configured to correct the target value and adjust the drive current output from the energizing circuit to match the response characteristic with the reference characteristic.

3. The electronic control unit according to claim 1, wherein the computer is configured to correct a detection value of the drive current input from the current detection circuit to match the response characteristic with the reference characteristic.

4. The electronic control unit according to claim 1, wherein the reference characteristic is a characteristic of the drive current with respect to the target value acquired using an electronic component different from the electronic component.

5. The electronic control unit according to claim 1, wherein the reference characteristic is a characteristic of the drive current with respect to the target value acquired by using an electronic component before being replaced with the electronic component.

6. A calibration method for an electronic control unit that controls a drive current for driving an electric device according to an input signal,
the electronic control unit comprising:
a computer that calculates a target value based on the input signal and calculates a control command value for the electric device according to the target value; and
an electronic component including at least one of an energizing circuit that outputs the drive current according to the control command value and a current detection circuit that detects the drive current and inputs to the computer,
the calibration method comprising:
collecting a first data set that is relationship data between the target value and the drive current in a case where a first electronic component is used as the electronic component;
changing the first electronic component with a second electronic component;
collecting a second data set that is relationship data between the target value and the drive current in a case where the second electronic component is used;
identifying, as a reference characteristic, a response characteristic of the drive current with respect to the target value based on the first data set in a case of using the first electronic component;
identifying, as a calibration-subject characteristic, a response characteristic of the drive current with respect to the target value based on the second data set in a case where the second electronic component is used; and
programming the computer to correct the calibration-subject characteristic to match the reference characteristic.

7. The calibration method for the electronic control unit according to claim 6, wherein the computer is programmed to adjust the drive current output from the energizing circuit as correct the target value, and match the calibration-subject characteristic with the reference characteristic.

8. The calibration method for the electronic control unit according to claim 6, wherein the computer is programmed to correct a detection value of the drive current input from the electronic component and match the calibration-subject characteristic with the reference characteristic.
